# EUROPEAN PATENT SPECIFICATION

(11) **EP 2 532 950 B1**
(45) Date of publication and mention of the grant of the patent: **20.09.2017**
(21) Application number: 12170921.6
(22) Date of filing: 06.06.2012
(51) Int. Cl.: F21S 8/10

(54) **VEHICULAR HEADLAMP DEVICE**
FAHRZEUGSCHEINWERFERVORRICHTUNG
DISPOSITIF DE PHARE DE VÉHICULE

(30) Priority: 10.06.2011 JP 2011129662
(43) Date of publication of application: 12.12.2012
(73) Proprietor: Koito Manufacturing Co., Ltd., Tokyo 108-8711 (JP)
(72) Inventor: Mochizuki, Kiyotaka, Shizuoka-shi, Shizuoka 424-8764 (JP)
(74) Representative: Grünecker Patent- und Rechtsanwälte PartG mbB

(56) References cited:
- EP-A2- 2 085 688
- EP-A2- 2 280 215
- WO-A2-2009/130655
- DE-A1-102007 040 042
- DE-A1-102008 032 345
- DE-U1-202010 006 097

## Description

### BACKGROUND OF THE INVENTION

### 1. Field of the Invention

The present invention relates to a vehicular headlamp device for a vehicle, such as an automobile, and more particularly, to a vehicular headlamp device that makes it possible to improve visibility of a forward region of a host vehicle and prevent the driver of a forward vehicle from being blinded.

### 2. Description of Related Art

Headlight devices have been suggested that increase the forward visibility of a host vehicle, but prevent the driver of a forward vehicle, such as a leading vehicle or an oncoming vehicle, which is present ahead of the host vehicle, from being blinded. One of such devices is what is called an all zone beam (AZB) lamp that divides a forward region into a plurality of zones (divided regions) and performs light distribution control by controlling the quantity of light for each zone independently. For example, in the configuration described in Japanese Patent Application Publication No. 1-244934 (JP-1-244934 A), a liquid crystal panel in which light transmitting elements are arranged in the form of a matrix is disposed on the front side of a lamp light source, and the light distribution pattern created by the light emitted from the lamp light source is controlled by independently controlling the transmissivity of each light transmitting element of the liquid crystal panel. In such an AZB lamp, the illumination light quantity in the zone where the forward vehicle is present is suppressed, while the illumination light quantity in another wide zone can be increased. Further, in the configuration described in Japanese Patent Application Publication No. 2009-218155 (JP-2009-218155 A), a plurality of light-emitting elements are provided to illuminate different zones and the quantity of light of each of the plurality of light-emitting elements is independently controlled, thereby making it possible to obtain a light distribution pattern in which the illumination light quantity in the zone where the forward vehicle is present is suppressed, while other zones are illuminated at a high illumination light quantity.

When headlamps of the AZB system are used in an automobile, the zones of the headlamps provided on the left and right sides of the automobile should match each other or be in a predetermined positional relationship. Thus, in the configuration described in JP-1-244934 A, since the light quantity in the left and right headlamps should be controlled with respect to the same zone, the zones of the left and right headlights should be matched on the light distribution pattern. In the configuration described in JP-2009-218155 A, the positional relationship of the zones of the left and right headlamps should be adjusted so that part of a zone of the right headlamp overlaps a zone of the left headlamp and the other part of the zone of the right headlamp overlaps a zone adjacent to the zone of the left headlamp. Therefore, in the configurations described in both JP-1-244934 A and JP-2009-218155 A, the directions of optical axes of the left and right headlamps should be adjusted with high precision, but the optical axes of the left and right headlamps are actually difficult to adjust with high precision. Therefore, in order to prevent reliably the driver of the forward vehicle from being blinded, the zone where the quantity of light is to be suppressed should be increased and the quantity of light should be suppressed in a region wider than the region where the forward vehicle is present. As a result, the region where the quantity of light is suppressed is widened accordingly and the region for ensuring visibility is narrowed. Further, in order to realize high-precision and high-quality illumination, it is preferable that the number of zones constituting the light distribution pattern be increased, but the number of objects for which the quantity of radiated light is controlled, that is, the number of light transmitting elements or light-emitting elements, increases with the increase in the number of zones and the light distribution control becomes complicated. Document DE 10 2007 040 042 A1 discloses a headlight which comprises at least one LED array and the contributions of at least two LED's to the illumination intensity distribution value overlap at least partially in terms of the horizontal angle, wherein the illumination intensity can be defined respectively for different positions in front of a motor vehicle and for a detected object, a horizontal angle range which is critical in terms of dazzle is then identified in each case as a function of the position of the object with respect to the motor vehicle and as a function of an assumed or identified object width, the individual LED's are driven while taking into account the overlapping, in terms of horizontal angle, of their contributions to the illumination intensity distribution value, in such a way that an illumination intensity limiting value is not exceeded in the horizontal angle range which is critical in terms of dazzle and in terms of the position of the detected object.

### SUMMARY OF THE INVENTION

An object of the present invention is to provide a vehicular headlamp device that makes it possible to improve visibility of a forward region and prevent the driver of a forward vehicle from being blinded without complicating light distribution control.

One aspect of the present invention is a vehicular headlamp device as defined in claim 1.

In the one aspect of the present invention, it is preferable that the light illumination region of the one lamp be divided in a horizontal direction into a plurality of vertical line zones having a zone shape extending in a vertical direction, and the light illumination region of the other lamp be divided in the vertical direction into a plurality of horizontal line zones having a zone shape extending in the horizontal direction.

In the one aspect of the present invention, it is preferable that the one lamp include: a first lamp body; a plurality of first light sources arranged along the horizontal direction inside the first lamp body; and a first projection lens that is fixedly supported in a front opening of the first lamp body and formed by first toric lens portions that are arranged in the horizontal direction correspondingly to the plurality of first light sources and are integrated, and the other lamp include: a second lamp body; a plurality of second light sources arranged along the vertical direction inside the second lamp body; and a second projection lens that is fixedly supported in a front opening of the second lamp body and formed by second toric lens portions that are arranged in the vertical direction correspondingly to the plurality of second light sources and are integrated.

In the one aspect of the present invention, it is preferable that the vehicular headlamp device further include an imaging device that is configured to pick up an image of at least the light illumination regions to detect a forward vehicle present in the light illumination regions, wherein the control unit is configured to dim or switch off, based on a detection result of the imaging device, at least one of the first light sources and at least one of the second light sources, the one of the first light sources and the one of the second light sources corresponding to the region where the forward vehicle is present.

In the one aspect of the present invention, it is preferable that an imaging optical axis of the imaging device coincide with a lamp optical axis of the one lamp.

In the one aspect of the present invention, it is preferable that vehicular headlamp device further include an imaging device that is configured to pick up an image of at least the light illumination regions to detect a forward vehicle present in the light illumination regions, wherein an imaging optical axis of the imaging device coincides with a lamp optical axis of the one lamp.

In the one aspect of the present invention, it is preferable that each of the first light sources and the second light sources be a light emitting diode.

In the one aspect of the present invention, it is preferable that the pair of lamps LHi, RHi be a left headlamp and a right head lamp that are configured to be provided on the left and right sides of the vehicle, respectively.

According to the present invention, by superposing the light illumination region of one lamp that is divided into zones in one direction and that of the other lamp that is divided into zones into a direction crossing the one direction, it is possible to form the light illumination region as an aggregation of intersection zones in which the zones of both lamps cross each other, and where the light quantity of the zones of at least one lamp is controlled, the light quantity in the intersection zones can be controlled. As a result, by controlling the quantity of light only in the intersection zone requiring the control, it is possible to prevent the driver of the forward vehicle from being blinded and also to improve the visibility in the forward region. In addition, the optical axis adjustment in both lamps can be simplified, the number of zones that are the object of light quantity control in the light illumination region can be reduced, and the control can be simplified.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration diagram illustrating an embodiment of the present invention;
FIG. 2A is an exploded perspective view of part of a left headlamp unit:
FIG. 2B is an exploded perspective view of part of a right headlamp unit;
FIG. 3A is a zone configuration diagram of the left high-beam distribution pattern;
FIG. 3B is a zone configuration diagram of the right high-beam distribution pattern;
FIG. 3C is a zone configuration diagram of the high-beam distribution pattern in which the left and right high-beam distribution patterns are superposed;
FIG. 4A is a zone configuration diagram of the left high-beam distribution pattern, illustrating an example of light distribution control in the embodiment;
FIG. 4B is a zone configuration diagram of the right high-beam distribution pattern, illustrating an example of light distribution control in the embodiment;
FIG 4C is a zone configuration diagram of the high-beam distribution pattern in which the left and right high-beam distribution patterns are superposed, illustrating an example of light distribution control in the embodiment;
FIG. 5A illustrates an angular position of a forward vehicle for which an image has been picked up;
FIG. 5B illustrates the angular position of the forward vehicle in a zone of the light distribution pattern; and
FIG. 5C illustrates an angular position of a forward vehicle for which an image has been picked up in the case in which the imaging camera is provided in the lateral center of a host vehicle.

### DETAILED DESCRIPTION OF EMBODIMENTS

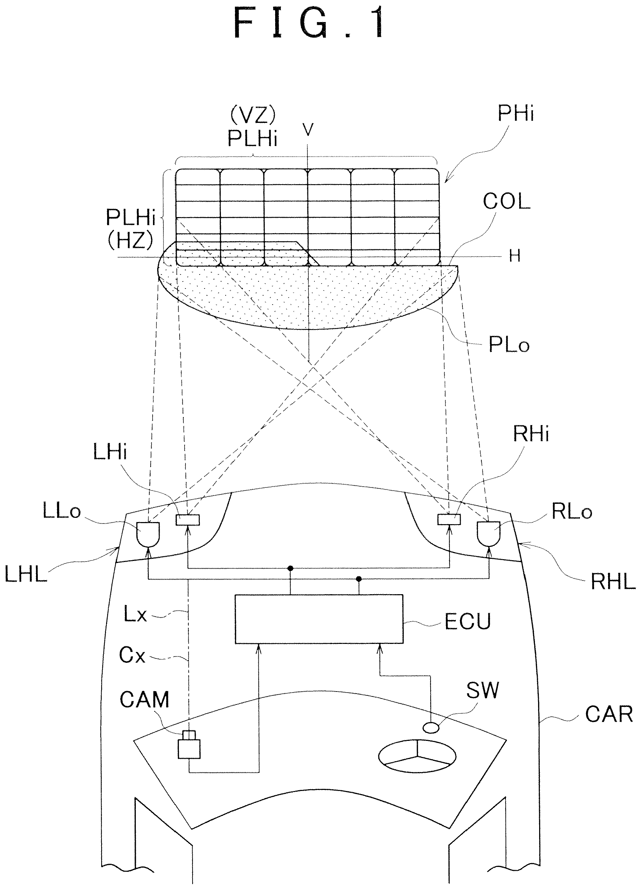

Embodiments of the present invention will be explained below with reference to the appended drawings. FIG. 1 is a schematic configuration diagram illustrating an embodiment in which the present invention is applied to a headlamp device for an automobile. Respective headlamps, that is, a left headlamp LHL and a right headlamp RHL, are installed on the front left and right sides of an automobile CAR. Each of the headlamps LHL, RHL is provided with a respective low-beam lamp unit LLo, RLo and a respective high-beam lamp unit LHi, RHi. The left and right low-beam lamp units LLo, RLo are turned on simultaneously, radiated lights of both low-beam lamp units LLo, RLo are superposed, and light is radiated in a low-beam distribution pattern PLo into a region ahead of the automobile CAR as indicated by dots in the drawing. Further, the left and right high-beam lamp units LHi, RHi can radiate light to substantially identical light illumination regions, but in different light distribution patterns. The two high-beam lamp units LHi, RHi are turned on simultaneously, and the radiated lights of the two high-beam lamp units LHi, RHi are superposed and form the desired high-beam distribution pattern PHi shown by a lattice figure in the drawing. Illumination with what is called the high-beam distribution is performed by combining this high-beam distribution pattern PHi with the aforementioned low-beam distribution pattern PLo.

The left and right headlamps LHL, RHL are connected to a light distribution control unit ECU configured as an electronic control circuit, and the light distribution control unit ECU turns on and off the low-beam lamp units LLo, RLo and high-beam lamp units LHi, RHi and controls the quantity of light thereof. A lamp switch SW is connected to the light distribution control unit ECU. An imaging camera CAM that picks up the image of a region ahead of the host vehicle is also connected to the light distribution control unit ECU. The light distribution control unit ECU can detect a forward vehicle such as a leading vehicle or an oncoming vehicle present ahead of the host vehicle by acquiring the image picked up by the imaging camera CAM and conducting image analysis. The term, forward vehicle, used herein also includes a pedestrian or a light vehicle such as a bicycle that is present ahead of the host vehicle. The imaging camera CAM is installed at a front position inside the cabin of the host vehicle, which is advantageous for imaging the forward region. In this embodiment, the imaging camera is provided at a position on a line that is a rearward extension of a lamp optical axis Lx of the left high-beam lamp unit LHi, more specifically at a position in which an imaging optical axis Cx of the imaging camera CAM matches the lamp optical axis Lx of the left high-beam lamp unit LHi.

The left and right low-beam lamp units LLo, RLo are not limited to special lamp types such as projector lamps or reflector lamps. Thus, the conventional lamp units that enable light illumination in a low-beam distribution pattern PLo having a specific cut-off line COL, such as shown in FIG. 1, are used, and the detailed explanation thereof is therefore herein omitted.

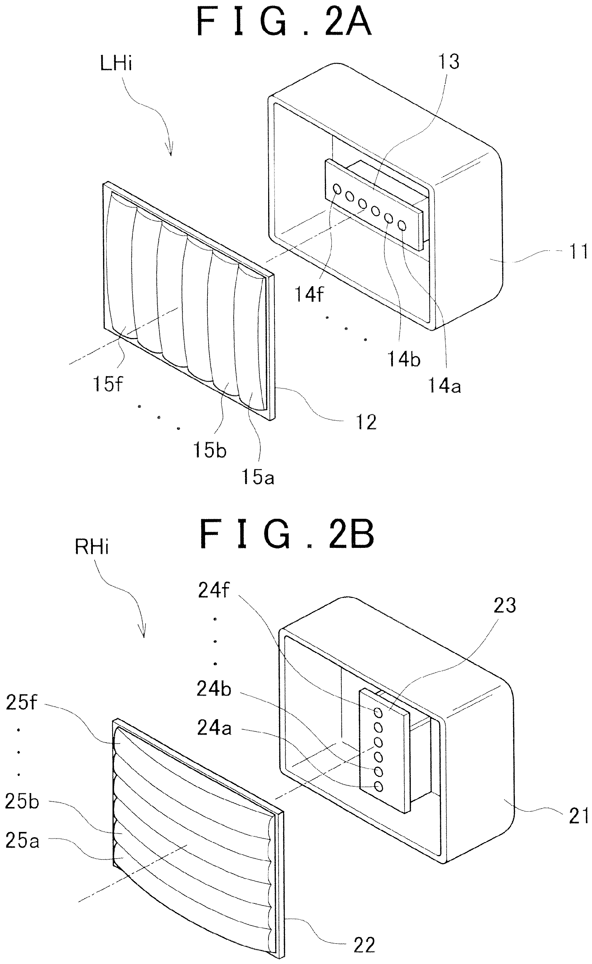

The left and right high-beam lamp units LHi, RHi have a common feature of including a plurality of light-emitting elements in a lamp body and an projection lens for diffusing the light emitted by the light-emitting elements to obtain a strip-shaped (linear) light distribution, but somewhat different configurations. FIG. 2A is a perspective view illustrating a schematic configuration of the left high-beam lamp unit LHi. In this configuration, a plurality of light-emitting elements, in this case six LEDs 14, are provided and supported in a horizontal lateral row, such that the optical axis of radiated light is directed forward, on the surface of a board 13 supported inside a container-shaped lamp body 11 formed to have an almost square shape in the front view thereof. These six LEDs 14 are independently switched on and off and the light quantity thereof is independently controlled by the aforementioned light distribution control unit ECU.

A projection lens 12 is fixedly supported in the front opening of the lamp body 11, and the light emitted from each of the six LEDs 14 is directed forward in a diffused state. The projection lens 12 is formed by integrating toric lens portions 15a to 15f that are arranged in the horizontal direction correspondingly to the six LEDs 14a to 14f and equal in number thereto. Each of the toric lens portions 15a to 15f has a somewhat narrow elongated shape extending in the vertical direction in the front view thereof, and the front surface thereof is formed as a curved surface that is convex forward in the horizontal direction and vertical direction. In particular, the curvature in the horizontal direction is greater than that in the vertical direction. Furthermore, a plurality of shades (light blocking plates), which are not shown in the figure, are provided inside the lamp body 11 so that the light emitted by each of the LEDs 14a to 14f is incident on the corresponding toric lens portion 15a to 15b, but is prevented from being incident on the other toric lens portions as much as possible. Where the directivity of the light emitted by the LEDs 14a to 14f is high and only a small amount of the light is incident on other toric lens portions, the shades may be omitted.

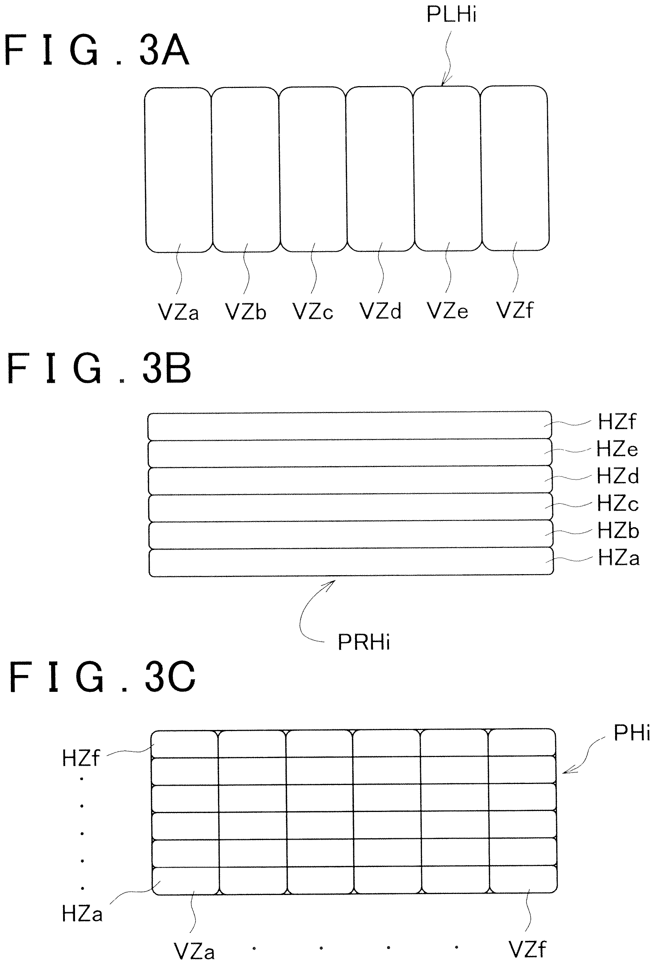

With such a left high-beam lamp unit LHi, the light emitted from each LED 14a to 14f is incident on the corresponding toric lens portion 15a to 15f. As mentioned hereinabove, the toric lens portions 15a to 15f have mutually different back focal point positions in the horizontal direction and vertical direction. Therefore, the lights incident upon the toric lens portion 15a to 15f have mutually different refraction states, that is, diffusion states, in the horizontal direction and vertical direction, and the diffusion in the horizontal direction is small, but the diffusion in the vertical direction is large. Therefore, when the left high-beam lamp unit LHi is turned on, the light emitted by each LED 14a to 14f assumes the distribution such that strip-shaped vertical line zones VZa to VZf, which are long in the vertical direction and short in the horizontal direction, are illuminated, as shown in FIG. 3A, and when all of the LEDs 14a to 14f emit light, a left high-beam distribution pattern PLHi is formed in which the vertical line zones VZa to VZf created by the LEDs are arranged in the horizontal direction.

The right high-beam lamp unit RHi is configured substantially similarly to the aforementioned left high-beam lamp unit LHi as shown by a perspective view of a schematic configuration thereof in FIG. 2B. However, a plurality, six in this case, of LEDs 24a to 24f supported on a board 23 that is supported inside a lamp body 21 are arranged in the vertical direction. The configuration of toric lens portions 25a to 25f of an projection lens 22 is also different from that in the left high-beam lamp unit LHi. The projection lens 22 is formed by integrating the toric lens portions 25a to 25f that are arranged in the vertical direction correspondingly to the six LEDs 24a to 24f and equal in number thereto. Each of the toric lens portions 25a to 25f has a somewhat narrow elongated shape extending in the horizontal direction in the front view thereof, and the front surface thereof is formed as a curved surface that is convex forward in the horizontal direction and vertical direction. The curvature in the vertical direction is greater than that in the horizontal direction. Therefore, when the right high-beam lamp unit RHi is turned on, the light emitted by each LED 24a to 24f assumes the distribution such that strip-shaped horizontal line zones HZa to HZf, which are long in the horizontal direction and short in the vertical direction, are illuminated, as shown in FIG. 3B, and when all of the LEDs 24a to 24f emit light, a right high-beam distribution pattern PRHi is formed in which the horizontal line zones HZa to FIZf created by the LEDs are arranged in the vertical direction.

Those left and right high-beam distribution patterns PLHi, PRHi are superposed by adjusting the optical axis positions of the left and right high-beam lamp units LHi, RHi so that the left high-beam distribution pattern PLHi and the right high-beam distribution pattern PRHi overlap and match, whereby the aforementioned high-beam distribution pattern PHi is formed. As shown in FIG. 3C, those superposed left and right high-beam distribution patterns PLHi and PRHi form the high-beam distribution pattern PHi, in which the vertical line zones VZa to VZf and the horizontal line zones HZa to HZf are superposed, those line zones cross each other, and a total of 6 x 6 = 36 intersection zones are aggregated. It goes without saying that boundary lines of the line zones or intersection zones are not visible to the human eye. In addition, as described above, such a high-beam distribution pattern PHi is emitted to an upper region as compared to the low-beam distribution pattern PLo shown in FIG. 1 and merged with the low-beam distribution pattern PLo to perform the illumination with what is called a high-beam distribution.

In such a headlamp device, when the lamp switch SW is turned on during normal driving, in principle, the left and right low-beam lamp units LLo, RLo are switched on, and the region ahead of the host vehicle is illuminated in a low-beam distribution pattern PLo. Further, when the host vehicle is driven in suburban areas or at a high speed, the left and right high-beam lamp units LHi, RHi are also turned on by switching the lamp switch SW, and a region ahead of the host vehicle is illuminated with the high-beam distribution, in which the low-beam distribution pattern PLo is merged with the high-beam distribution pattern PHi. As a result, the region ahead of the host vehicle is widely illuminated at a high quantity of light, and the visibility ahead of the host vehicle is increased.

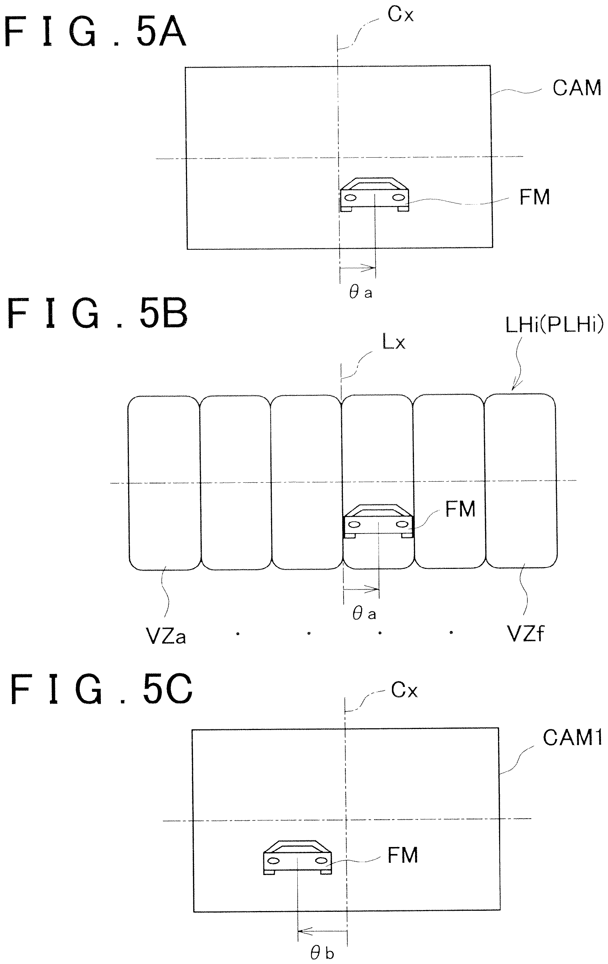

Light distribution control performed by the light distribution control unit ECU during such light illumination with the high-beam distribution will be explained below. When a forward vehicle FM is present ahead of the host vehicle, the light distribution control unit ECU analyzes the image of the region ahead of the host vehicle that has been picked up by the imaging camera CAM, thereby detecting the forward vehicle FM and detecting the angular position of the detected forward vehicle, that is, the angular position at which the forward vehicle is present in the lateral direction with respect to the advance direction of the host vehicle. For example, in the case shown in FIG. 5A, the forward vehicle FM is detected at an angular position θa with respect to the camera optical axis Cx. The light distribution control unit ECU then performs the processing of comparing the detected angular position with the high-beam distribution pattern PHi and determines the position at which the forward vehicle FM is present in the high-beam distribution pattern PHi. A common headlamp device is designed to prevent the driver of the forward vehicle from being blinded by the low-beam distribution pattern PLo, and therefore the position at which the forward vehicle FM is detected in the high-beam distribution pattern PHi is determined on an assumption that the forward vehicle FM is not positioned in the low-beam distribution pattern PLo. Thus, determined are in which one of the intersection zones shown in FIG. 3C constituting the high-beam distribution pattern PHi the forward vehicle is present, in which one of the vertical line zones VZ of the left high-beam distribution pattern PLHi the forward vehicle is positioned, and in which one of the horizontal line zones HZ of the right high-beam distribution pattern PRHi the forward vehicle is positioned.

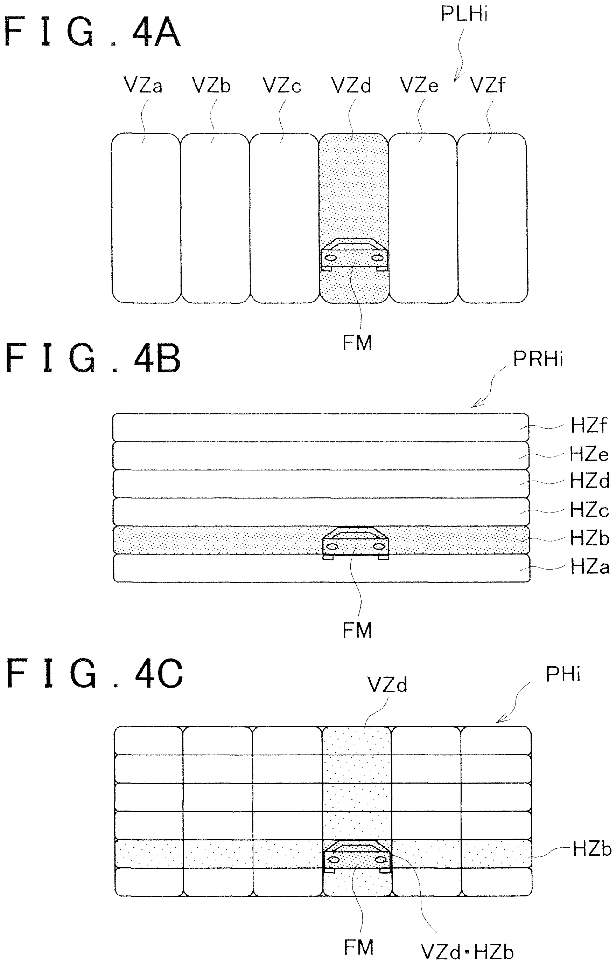

Then, the light distribution control unit ECU turns off the LED corresponding to the vertical line zone of the left high-beam distribution pattern PLHi where the forward vehicle FM has been determined to be positioned and simultaneously turns off the LEND corresponding to the horizontal line zone of the right high-beam distribution pattern PRHi where the forward vehicle has been determined to be positioned. For example, as shown in FIGS. 4A and 4B, when the forward vehicle FM has been determined to be positioned in the vertical line zone VZd of the left high-beam distribution pattern PLHi and then in the horizontal line zone HZb of the right high-beam distribution pattern PRHi, the LEDs 14d, 24b corresponding to those vertical line zone VZd and the horizontal line zone HZb, respectively, are turned off. As a result, the left high-beam distribution pattern PLHi becomes a distribution pattern in which the vertical line zone VZd is turned off and the other vertical line zones emit light. The right high-beam distribution pattern PRHi becomes a distribution pattern in which the horizontal line zone HZb is turned off and the other horizontal line zones emit line. Therefore, as shown in FIG. 4C, in the high-beam distribution pattern PHi obtained by superposition of the left and right high-beam distribution patterns PLHi, PRHi, the illumination is performed at a high quantity of light by superposition of lights of both high-beam lamp units LHi, RHi in the zones except the vertical line zone VZd and the horizontal line zone HZb. Meanwhile, no superposition of light occurs in the intersection zone VZd·HZb where the quenched vertical line zone VZd and horizontal line zone HZb cross each other and therefore a completely quenched state is assumed. The vertical line zone VZd and the horizontal line zone HZb except the intersection zone VZd·HZb are both illuminated by the light from the other high-beam lamp unit and therefore illuminated at a light quantity that is substantially half the high light quantity.

As described above, the light distribution control unit ECU brings into a quenched state only the intersection zone in the high-beam distribution pattern PHi in which the forward vehicle FM is present, based on the detected forward vehicle FM. Therefore, when the position of the forward vehicle FM changes, the light distribution control ECU changes the intersection zone in the high-beam distribution pattern PHi that is quenched, in accordance with the change in the position of the forward vehicle. As a result, in the high-beam distribution pattern PHi, blinding of the driver of the forward vehicle FM can be reliably prevented by quenching the intersection zone where the forward vehicle FM is present. Meanwhile, most of the intersection zones where the forward vehicle FM is not present are illuminated at a high light quantity and some of them are illuminated at a half light quantity. Therefore, visibility in the region where the forward vehicle FM is not present can be increased.

Thus, the headlamp device of the embodiment is configured so that the vertical line zones VZ formed by the left high-beam lamp unit LHi and the horizontal line zones HZ formed by the right high-beam lamp unit RHi are caused to cross each other and the high-beam distribution pattern PHi is automatically divided into intersection zones arranged as a large number of cells by such crossing of the line zones VZ and HZ. Therefore, the adjustment for matching a plurality of zones constituting the left and right high-beam distribution patterns PLHi, PRHi or the adjustment for setting those zones to a predetermined positional relationship becomes unnecessary, and it therefore becomes unnecessary to precisely adjust the optical axes of the left and right high-beam lamp units LHi, RHi. Further, when the zone corresponding to the forward vehicle FM is determined, it suffices that a corresponding one of the vertical line zones VZ of the left high-beam distribution pattern PLHi is selected with respect to the horizontal direction and a corresponding one of the horizontal line zones HZ of the right high-beam distribution pattern PRHi is determined with respect to the vertical direction. Those zones VZ, HZ may be determined independently from each other. Therefore, the light distribution control unit ECU can easily perform the determination with respect to the left and right headlamp units LHi, RHi.

Further, the high-beam distribution pattern PHi can be formed such that the number of intersection zones is the result of multiplying the number of the vertical line zones VZ by the number of horizontal line zones HZ that constitute the left and right high-beam distribution patterns PLHi, PRHi. Thus, in the embodiment, the high-beam distribution pattern PHi includes six vertical line zones VZ and six horizontal line zones HZ and therefore includes 6 × 6 = 36 intersection zones. Therefore, the light distribution control unit ECU can realize the light emission - quenching control of 36 divided zones constituting the high-beam distribution pattern PHi by performing light emission - quenching control with respect to six line zones VZ and six line zones HZ of each of the left and right high-beam distribution patterns PLHi, PRHi, that is, by performing light emission - quenching control with respect to six LEDs 14 and six LEDs 24 of each of the left and right high-beam lamp units LHi, RHi. Therefore, the control load in the light distribution control unit ECU is reduced and the control is simplified.

When a forward vehicle is detected, the image of the forward region picked up by the imaging camera CAM is analyzed. In the embodiment, the imaging optical axis Cx of the imaging camera CAM is aligned with the lamp optical axis Lx of the left headlamp unit LHi, as shown in FIG. 1. Therefore, the position of the forward vehicle FM in the picked-up image, that is, the angular orientation θa of the forward vehicle with respect to the image center, which is shown in FIG. 5A, substantially matches the angular orientation θa of the forward vehicle with respect to the lamp optical line Lx of the left headlamp unit LHi, as shown in FIG. 5B. Therefore, where the angular position of the forward vehicle FM obtained by analyzing the picked-up image is applied to the left high-beam distribution pattern PLHi and the vertical line zone VZ corresponding to the angular position is determined, it directly corresponds to the LED 14 that is the object of light quantity control in the left headlamp unit LHi and the control in the light distribution control unit ECU can be simplified.

Thus, in the case of the imaging camera CAM1 provided at the lateral center of the host vehicle, the angular orientation θb of the forward vehicle FM with respect to the center Cx of the picked-up image, as shown in FIG. 5C, differs from the angular orientation θa of the forward vehicle with respect to the lamp optical axis Lx of the left head lamp unit LHi shown in FIG. 5B. Therefore, when the zone corresponding to the forward vehicle FM is determined by the light distribution control unit ECU, the processing for correcting the deviation of the angular orientation is necessary and the control is complicated.

It suffices that the imaging camera CAM is configured such that the optical axis thereof matches that of the headlamp unit on the side forming the vertical line zones, and in the embodiment, the imaging camera is disposed on the left side because the vertical line zones are formed by the left headlamp unit LHi. In the case of the opposite arrangement of the left and right head lamp units, that is, when the vertical line zones are formed by the right head lamp unit RHi, the imaging camera CAM may be disposed at a position on the lamp optical axis of the right headlamp unit RHi on the right side of the host vehicle.

In the embodiment, LEDs of each lamp are controlled by switching on and quenching, but it is also possible to perform the control by changing the light quantity for each LED. For example, by controlling the quantity of light during light emission between the full light quantity and half light quantity, it is possible to control the light quantity to three levels in the intersection zone in which the left and right lamp zones cross each other, namely, the light quantity obtained when the full light quantities of both zones are superposed, the light quantity obtained when half light quantities of both zones are superposed, and the light quantity obtained when the full light quantity and half light quantity are superposed. This provides a variety of light quantity distributions produced by zones in the high-beam distribution pattern and light distribution control with a high degree of freedom can be performed. It goes without saying that each LED can be also controlled with finer division of light quantity, and the light distribution control with a higher degree of freedom in selecting the light quantity can be performed.

In the embodiment, LEDs are used as the light sources provided in the left and right high-beam lamp units, but other light-emitting elements such as laser diodes (LD) or electroluminescence (EL) elements may be used, or bulbs (electric bulbs) may be used. Further, the vertical line zones and horizontal line zones are formed by diffusing the light emitted from a plurality of LEDs by toric lens portions and light emission and quenching in each zone is controlled, but it is also possible to provide a stripe-shaped light transmitting element constituted by a liquid crystal panel in front of the light source and form the vertical line zones and horizontal line zones by controlling light transmission of the light transmitting elements. Furthermore, the vertical line zones and horizontal line zones may be formed by selectively reflecting forward the light emitted from a light source, with the use of a plurality of mirrors arranged in a stripe configuration, for example, galvano mirrors.

Further, in the above description of the embodiment, an example is described in which a high-beam distribution pattern is formed by a low-beam lamp unit and a high-beam lamp unit, while a high-beam lamp unit may be configured so as to be able to illuminate a region including low-beam distribution as the light illumination region of the high-beam lamp unit described in the embodiment and light illumination in the low-beam distribution pattern may be performed by light quantity control in the zones as described hereinabove. In this case, a headlamp device is configured to include one high-beam lamp unit on each of the left and right sides, which is advantageous in simplifying the configuration and reducing cost.

In the above-described embodiment, the vertical line zones are formed by the left headlamp and the horizontal line zones are formed by the right head lamp, while a configuration may be also used in which the horizontal line zones are formed by the left head lamp and the vertical line zones are formed by the right head lamp. The vertical line zones and horizontal line zones in the present invention do not necessarily mean the absolute directions, and a configuration may be used, in which line zones cross each other in oblique directions, for example, line zones tilted to the right and line zones tilted to the left, as long as the line zones cross each other. It goes without saying that a configuration in which line zones cross each other in other directions or at other angles may be also used.

The present invention can be employed in a headlamp device configured to perform light quantity control with a forward region divided into a plurality of zones.

## Claims

1. A vehicular headlamp device comprising:
a pair of lamps (LHi, RHi), a light illumination region (PLHi) of one of which is divided into a plurality of zones (VZa to VZf) in one direction, and a light illumination region (PRHi) of the other of which is divided into a plurality of zones (HZa to HZf) in a direction crossing the one direction; and
a control unit (ECU) configured to control an illumination light quantity of each of the zones, wherein
the vehicular headlamp device is configured to obtain a required light distribution pattern (PHi) by superposing the light illumination regions (PLHi, PRHi) of the pair of lamps (LHi, RHi), **characterized in that**
the light illumination region (PLHi) of the one lamp is divided only in the one direction, and
the light illumination region (PRHi) of the other lamp is devided only in the direction crossing the one direction.

2. The vehicular headlamp device according to claim 1, wherein
the light illumination region (PLHi) of the one lamp (LHi) is divided in a horizontal direction into a plurality of vertical line zones (VZa to VZf) having a zone shape extending in a vertical direction, and
the light illumination region (PRHi) of the other lamp (RHi) is divided in the vertical direction into a plurality of horizontal line zones (HZa to HZf) having a zone shape extending in the horizontal direction.

3. The vehicular headlamp device according to claim 2, wherein
the one lamp (LHi) includes:
a first lamp body (11);
a plurality of first light sources (14a to 14f) arranged along the horizontal direction inside the first lamp body (11); and
a first projection lens (12) that is fixedly supported in a front opening of the first lamp body (11) and formed by first toric lens portions (15a to 15f) that are arranged in the horizontal direction correspondingly to the plurality of first light sources (14a to 14f) and are integrated, and
the other lamp (RHi) includes:
a second lamp body (21);
a plurality of second light sources (24a to 24f) arranged along the vertical direction inside the second lamp body (21); and
a second projection lens (22) that is fixedly supported in a front opening of the second lamp body (21) and formed by second toric lens portions (25a to 25f) that are arranged in the vertical direction correspondingly to the plurality of second light sources (24a to 24f) and are integrated.

4. The vehicular headlamp device according to claim 3, further comprising an imaging device (CAM) that is configured to pick up an image of at least the light illumination regions (PRHi, PRHi) to detect a forward vehicle present in the light illumination regions (PRHi, PRHi), wherein
the control unit (ECU) is configured to dim or switch off, based on a detection result of the imaging device (CAM), at least one of the first light source (14a to 14f) and at least one of the second light source (24a to 24f), the one of the first light sources and the one of the second light sources corresponding to the region where the forward vehicle is present.

5. The vehicular headlamp device according to claim 4, wherein
an imaging optical axis (Cx) of the imaging device (CAM) coincides with a lamp optical axis (Lx) of the one lamp in a plan view.

6. The vehicular headlamp device according to claim 2 or 3, further comprising
an imaging device (CAM) that is configured to pick up an image of at least the light illumination regions (PRHi, PRHi) to detect a forward vehicle present in the light illumination regions (PRHi, PRHi), wherein
an imaging optical axis (Cx) of the imaging device (CAM) coincides with a lamp optical axis (Lx) of the one lamp in a plan view.

7. The vehicular headlamp device according to any one of claims 3 to 5, wherein
each of the first light sources (14a to 14f) and the second light sources (24a to 24f) is a light emitting diode.

8. The vehicular headlamp device according to any one of claims 1 to 7, wherein
the pair of lamps (LHi, RHi) are a left headlamp (LHi) and a right head lamp (RHi) that are configured to be provided on left and right sides of the vehicle, respectively.

## Patentansprüche

1. Fahrzeugscheinwerfervorrichtung, mit:
einem Paar aus Leuchten (LHi, RHi), wobei ein Lichtausleuchtungsgebiet (PLHi) einer Leuchte in mehrere Zonen (VZa bis VZf) in einer Richtung unterteilt ist, und wobei ein Lichtausleuchtungsgebiet (PRHi) der anderen Leuchte in mehrere Zonen (HZa bis HZf) in einer Richtung unterteilt ist, die die eine Richtung kreuzt; und
einer Steuereinheit (ECU), die ausgebildet ist, eine Ausleuchtungslichtintensität jeder der Zonen zu steuern, wobei
die Fahrzeugscheinwerfervorrichtung ausgebildet ist, ein erforderliches Lichtverteilungsmuster (PHi) zu erhalten, indem die Lichtausleuchtungsgebiete (PLHi, PRHi) der beiden Leuchten (LHi, RHi) überlagert werden, **dadurch gekennzeichnet, dass** das Lichtausleuchtungsgebiet (PLHi) der einen Leuchte nur in der einen Richtung unterteilt ist, und das Lichtausleuchtungsgebiet (PRHi) der anderen Leuchte nur in der Richtung, die die eine Richtung kreuzt, unterteilt ist.

2. Fahrzeugscheinwerfervorrichtung nach Anspruch 1, wobei
das Lichtausleuchtungsgebiet (PLHi) der einen Leuchte (LHi) in horizontaler Richtung in mehrere Vertikallinienzonen (VZa bis VZf) mit einer Zonenform, die sich in einer vertikalen Richtung erstreckt, unterteilt ist, und
das Lichtausleuchtungsgebiet (PRHi) der anderen Leuchte (RHi) in der vertikalen Richtung in mehrere Horizontallinienzonen (HZa bis HZf) mit einer Zonenform, die sich in der horizontalen Richtung erstreckt, unterteilt ist.

3. Fahrzeugscheinwerfervorrichtung nach Anspruch 2, wobei
die eine Leuchte (LHi) aufweist:
einen ersten Leuchtenkörper (11);
mehrere erste Lichtquellen (14a bis 14f), die im Inneren des ersten Leuchtenkörpers (11) entlang der horizontalen Richtung angeordnet sind; und
eine erste Projektionslinse (12), die an einer vorderen Öffnung des ersten Leuchtenkörpers (11) fixiert ist und durch erste torische Linsenbereiche (15a bis 15f), die in der horizontalen Richtung entsprechend zu den mehreren ersten Lichtquellen (14a bis 14f) angeordnet und integriert sind, gebildet ist, und
die andere Leuchte (RHi) aufweist:
einen zweiten Leuchtenkörper (21);
mehrere zweite Lichtquellen (24a bis 24f), die im Inneren des zweiten Leuchtenkörpers (21) entlang der vertikalen Richtung angeordnet sind; und
eine zweite Projektionslinse (22), die in einer vorderen Öffnung des zweiten Leuchtenkörpers (21) fixiert ist und durch zweite torische Linsenbereiche (25a bis 25f), die in der vertikalen Richtung entsprechend zu den mehreren zweiten Lichtquellen (24a bis 24f) angeordnet und integriert sind, gebildet ist.

4. Fahrzeugscheinwerfervorrichtung nach Anspruch 3, die ferner aufweist
eine bildgebende Einrichtung (CAM), die ausgebildet ist, ein Bild zumindest der Lichtausleuchtungsgebiete (PRHi, PRHi) aufzunehmen, um ein in Vorwärtsrichtung vorhandenes Fahrzeug, das in den Lichtausleuchtungsgebieten (PRHi, PRHi) vorhanden ist, zu erfassen, wobei
die Steuereinheit (ECU) ausgebildet ist, auf der Grundlage eines Erfassungsergebnisses der bildgebenden Einrichtung (CAM) mindestens eine der ersten Lichtquellen (14a bis 14f) und mindestens eine der zweiten Lichtquellen (24a bis 24f) zu dimmen oder abzuschalten, wobei die eine der ersten Lichtquellen und die eine der zweiten Lichtquellen dem Gebiet entsprechen, in welchem das in Vorwärtsrichtung vorhandene Fahrzeug vorhanden ist.

5. Fahrzeugscheinwerfervorrichtung nach Anspruch 4, wobei
in einer Draufsicht eine optische Abbildungsachse (Cx) der bildgebenden Einrichtung (CAM) mit einer optischen Leuchtenachse (Lx) der einen Leuchte übereinstimmt.

6. Fahrzeugscheinwerfervorrichtung nach Anspruch 2 oder 3, die ferner aufweist
eine bildgebende Einrichtung (CAM), die ausgebildet ist, ein Bild zumindest der Lichtausleuchtungsgebiete (PRHi, PRHi) aufzunehmen, um ein in Vorwärtsrichtung vorhandenes Fahrzeug, das in den Lichtausleuchtungsgebieten (PRHi, PRHi) vorhanden ist, zu erfassen, wobei
in einer Draufsicht eine optische Abbildungsachse (Cx) der bildgebenden Einrichtung (CAM) mit einer optischen Leuchtenachse (Lx) der einen Leuchte übereinstimmt.

7. Fahrzeugscheinwerfervorrichtung nach einem der Ansprüche 3 bis 5, wobei
jede der ersten Lichtquellen (14a bis 14f) und der zweiten Lichtquellen (24a bis 24f) eine lichtemittierende Diode ist.

8. Fahrzeugscheinwerfervorrichtung nach einem der Ansprüche 1 bis 7, wobei
das Paar aus Leuchten (LHi, RHi) entsprechend einen linken Scheinwerfer (LHi) und einen rechten Scheinwerfer (RHi) bildet, die ausgebildet sind, entsprechend auf einer linken Seite und einer rechten Seite des Fahrzeugs vorgesehen zu werden.

## Revendications

1. Dispositif de phare de véhicule comprenant :
une paire de phares (LHi, RHi), dont une zone d'éclairage (PLHi) est divisée en une pluralité de zones (VZa à VZf) dans une direction, et l'autre zone d'éclairage (PRHi) est divisée en une pluralité de zones (HZa à HZf) dans une direction croisant la une direction ; et
une unité de commande (ECU) configurée pour contrôler une quantité de lumière d'éclairage de chacune des zones, dans lequel
le dispositif de phare de véhicule est configuré pour obtenir un modèle de répartition de lumière requis (Phi) en superposant les zones d'éclairage (PLHi, PRHi) de la paire de phares (LHi, RHi), **caractérisé en ce que**
la zone d'éclairage (PLHi) du phare est divisée uniquement dans la une direction, et
la zone d'éclairage (PRHi) de l'autre phare est divisée uniquement dans la direction croisant la une direction.

2. Dispositif de phare de véhicule selon la revendication 1, dans lequel
la zone d'éclairage (PLHi) du phare (LHi) est divisée dans une direction horizontale en une pluralité de zones verticales (VZa à VZf) qui présentent une forme de zone s'étendant dans une direction verticale, et
la zone d'éclairage (PRHi) de l'autre phare (RHi) est divisée dans la direction verticale en une pluralité de zones horizontales (HZa à HZf) qui présentent une forme de zone s'étendant dans la direction horizontale.

3. Dispositif de phare de véhicule selon la revendication 2, dans lequel
le phare (LHi) comprend :
un premier corps de phare (11) ;
une pluralité de premières sources de lumière (14a à 14f) prévues le long de la direction horizontale à l'intérieur du premier corps de phare (11) ; et
une première lentille de projection (12) qui est supportée de manière fixe dans une ouverture avant du premier corps de phare (11) et est formée par des premières parties de lentille torique (15a à 15f) qui sont prévues dans la direction horizontale en correspondance avec la pluralité de premières sources de lumière (14a à 14f) et qui sont intégrées, et
l'autre phare (RHi) comprend :
un second corps de phare (21) ;
une pluralité de secondes sources de lumière (24a à 24f) prévues le long de la direction verticale à l'intérieur du second corps de phare (21) ; et
une seconde lentille de projection (22) qui est supportée de manière fixe dans une ouverture avant du second corps de phare (21) et est formée par des secondes parties de lentille torique (25a à 25f) qui sont prévues dans la direction verticale en correspondance avec la pluralité de secondes sources de lumière (24a à 24f) et qui sont intégrées.

4. Dispositif de phare de véhicule selon la revendication 3, comprenant en outre
un dispositif d'imagerie (CAM) qui est configuré pour capturer une image d'au moins les zones d'éclairage (PRHi, PRHi) afin de détecter un véhicule à l'avant présent dans les zones d'éclairage (PRHi, PRHi), dans lequel
l'unité de commande (ECU) est configurée pour atténuer ou éteindre, sur la base d'un résultat de détection du dispositif d'imagerie (CAM), au moins l'une des premières sources de lumière (14a à 14f) et au moins l'une des secondes sources de lumière (24a à 24f), l'une des premières sources de lumière et l'une des secondes sources de lumière correspondant à la zone dans laquelle le véhicule à l'avant est présent.

5. Dispositif de phare de véhicule selon la revendication 4, dans lequel
un axe optique d'imagerie (Cx) du dispositif d'imagerie (CAM) coïncide avec un axe optique de phare (Lx) du phare vu de dessus.

6. Dispositif de phare de véhicule selon la revendication 2 ou 3, comprenant en outre
un dispositif d'imagerie (CAM) qui est configuré pour capturer une image d'au moins les zones d'éclairage (PRHi, PRHi) afin de détecter un véhicule à l'avant présent dans les zones d'éclairage (PRHi, PRHi), dans lequel
un axe optique d'imagerie (Cx) du dispositif d'imagerie (CAM) coïncide avec un axe optique de phare (Lx) du phare vu de dessus.

7. Dispositif de phare de véhicule selon l'une quelconque des revendications 3 à 5, dans lequel
chacune des premières sources de lumière (14a à 14f) et des secondes sources de lumière (24a à 24f) est une diode électroluminescente.

8. Dispositif de phare de véhicule selon l'une quelconque des revendications 1 à 7, dans lequel
la paire de phares (LHi, RHi) est un phare de gauche (LHi) et un phare de droite (RHi) qui sont configurés pour être prévus sur les côtés gauche et droit du véhicule, respectivement.
